# EUROPÄISCHE PATENTSCHRIFT

(11) **EP 1 685 388 B1**
(45) Veröffentlichungstag und Bekanntmachung des Hinweises auf die Patenterteilung: **29.08.2007**
(21) Anmeldenummer: 04803169.4
(22) Anmeldetag: 18.11.2004
(51) Int. Cl.: G01N 21/85

(54) **VORRICHTUNG UND VERFAHREN ZUR UNTERSUCHUNG EINER FLÜSSIGKEITSPROBE**
DEVICE AND METHOD FOR ANALYSING A LIQUID SAMPLE
DISPOSITIF ET PROCEDE POUR ANALYSER UN ECHANTILLON LIQUIDE

(30) Priorität: 19.11.2003 US 523488 P; 22.09.2004 DE 102004045816
(43) Veröffentlichungstag der Anmeldung: 02.08.2006
(73) Patentinhaber: RAUMEDIC AG, 95233 Helmbrechts (DE)
(72) Erfinder: BUSCH, Heinz, Werner, 53639 Königswinter-Thomasberg (DE); GRABOWY, Udo, Heinrich, 53881 Euskirchen-Flamersheim (DE)
(74) Vertreter: Hofmann, Matthias
(86) Internationale Anmeldenummer: PCT/EP2004/013084
(87) Internationale Veröffentlichungsnummer: WO 2005/050183

(56) Entgegenhaltungen:
- WO-A-88/02109
- WO-A-91/16618
- WO-A-02/063285
- GB-A- 2 141 537
- US-A- 4 152 075
- US-A- 4 672 218
- DATABASE BIOSIS [Online] BIOSCIENCES INFORMATION SERVICE, PHILADELPHIA, PA, US; Juni 2002 (2002-06), LAUBE NORBERT ET AL: "Comparison of laser-probe and photometric determination of the urinary crystallization risk of calcium oxalate" XP002323489 Database accession no. PREV200200547040 & CLINICAL CHEMISTRY AND LABORATORY MEDICINE, Bd. 40, Nr. 6, Juni 2002 (2002-06), Seiten 595-599, ISSN: 1434-6621
- PATENT ABSTRACTS OF JAPAN Bd. 2000, Nr. 12, 3. Januar 2001 (2001-01-03) & JP 2000 266668 A (SOGO PHARMACEUTICAL CO LTD), 29. September 2000 (2000-09-29)
- PATENT ABSTRACTS OF JAPAN Bd. 1999, Nr. 04, 30. April 1999 (1999-04-30) & JP 11 014632 A (SANYO ELECTRIC CO LTD), 22. Januar 1999 (1999-01-22)
- LAUBE N ET AL: "Laser-probe-based investigation of the evolution of particle size distributions of calcium oxalate particles formed in artificial urines" JOURNAL OF CRYSTAL GROWTH, NORTH-HOLLAND PUBLISHING, AMSTERDAM, NL, Bd. 233, Nr. 1-2, November 2001 (2001-11), Seiten 367-374, XP004300618 ISSN: 0022-0248
- BONGARTZ DANIEL ET AL: "Direct measurement of calcium oxalate nucleation with a laser probe" UROLOGICAL RESEARCH, Bd. 27, Nr. 2, April 1999 (1999-04), Seiten 135-140, XP009049261 ISSN: 0300-5623
- CHAPLIN A J ET AL: "THE USE OF A LASER MICRO PROBE TO IDENTIFY CALCIUM OXALATE IN HISTOLOGICAL MATERIAL" HISTOCHEMISTRY, Bd. 75, Nr. 2, 1982, Seiten 259-268, XP009049262 ISSN: 0301-5564
- LAUBE NORBERT ET AL: "Hippuric acid as a modifier of calcium oxalate crystallisation" CLINICAL CHEMISTRY AND LABORATORY MEDICINE, Bd. 39, Nr. 3, März 2001 (2001-03), Seiten 218-222, XP009049263 ISSN: 1434-6621
- LAUBE NORBERT ET AL: "The relation of urinary Tamm-Horsfall-Protein on CaOx-crystallization under the scope of the Bonn-Risk-index" UROLOGICAL RESEARCH, Bd. 29, Nr. 1, Februar 2001 (2001-02), Seiten 45-49, XP002332556 ISSN: 0300-5623

## Beschreibung

Die Erfindung betrifft eine Vorrichtung und Verfahren zur Untersuchung einer Flüssigkeitsprobe, insbesondere einer Urinprobe zur Bestimmung des Harnsteinbildungsrisikos.

Das Risiko, an einem Harnsteinleiden zu erkranken, beträgt in den industrialisierten Ländern im Mittel 5 - 15 %; Spitzenwerte um 20 % werden in den Staaten der Golfregion erreicht. Die epidemiologischen Daten weisen eine steigende Tendenz für die Inzidenz als auch für die Prävalenz des Steinleidens auf. Dabei bestehen 75 % der in den Industrieländern gebildeten Steine aus Kalziumoxalat.

Ein Patient, der bereits einmal einen Stein gebildet hat, muss bei fehlender oder ungeeigneter Therapie mit einer Rezidivwahrscheinlichkeit von 75-100 % rechnen. Hieraus lässt sich der Bedarf für ein geeignetes Verfahren zur Bestimmung des Risikos von Harnsteinen ableiten. Dies ist insbesondere wichtig zur Bestimmung des Rezidivrisikos für bereits erkrankte Patienten.

Ein an der Urologischen Klinik der Universität Bonn entwickeltes Verfahren, das auf der Berechnung des so genannten Bonn-Risk-Index (BRI) beruht, hat sich zur Ermittlung eines Harnstein-Risikoindikators als geeignet erwiesen. Zur Berechnung des BRI wird einer Urinprobe in einem standardisierten Verfahren eine 40-millimolare Ammoniumoxalatlösung zugegeben, solange, bis sich eine Kalziumoxalat-Kristallisation einsetzt. Die bis zu diesem Moment der Urinprobe zugegebene millimolare Konzentration an Oxalat (Ox²⁻) wird bestimmt und auf ein Probenvolumen von 200 ml bezogen. In medizinischen Fachkreisen wird die Konzentration an Oxalat (Ox²⁻) bezogen auf ein Probenvolumen von 200 ml als zugegebene Menge an Oxalat (Ox²⁻) bezeichnet. Zusätzlich wird die initiale Konzentration an freien Kalziumionen in der Harnprobe [Ca ²⁺] ermittelt; die Konzentration wird in mmol/l angegeben. Der BRI berechnet sich dann als Als Risikogrenze für Kelziumoxalatateinbildung wird ein BRI von 1/L angesehen. Sämtliche Proben werden einer von acht Risikoklassen, I-VIII, zugeordnet. Der BRI /L trennt die Risikoklassen IV und V. In einer Abwandlung des Messverfahrens kann auch das Risiko zur Ausbildung von Katziumphosphat-Harnsteinen bestimmt werden, wobei anstatt der Ammoniumoxelatlösung eine Phosphatlösung der Urinprobe bis zur Kristallisation zugeführt und das Verhältnis von freien Kalzlumionen und Phosphatlösung als Risikoindikator bestimmt wird.

Aus der WO 02/083285 A2 ist eine Messvorrichtung zur Untersuchung einer Flüssigkeitsprobe mittels Titration bekannt.

Die WO 81/18818 A1 beschreibt einen Messkopf für eine Titrations-Messvorrichtung.

Zum eingangs erwähnten, an der Universität Bonn entwickelten Verfahren, sel auf der Fachartikel "Comparison of laser-probe and photometric determination of the urinary cristallisation risk of calcium oxalate"; Clinical Chemistry and Laboratory Medicine, Vol. 40, Nr. 6, Selten 595 ff, Juni 2002, hingewiesen.

Die JP 2000/266668 zeigt einen Messkopf zur Reaktionaüberwachung.

Die JP 11014632 zeigt einen Fasersensor zur Flüssigkeitspagelbestimmung.

Ferner sei verwiesen auf den Fachartikel "Laser-probe-based investigation of the evolution of particle sized distributions of calcium oxalate particles formed in artificial urine": Journal of Crystal Growth, Vol. 233; Nr. 1-2; Seiten 367 ff.

Die Aufgabe der Erfindung besteht darin, eine Vorrichtung und ein Verfahren zur Untersuchung von Flüssigkeitsproben anzugeben, mit der Insbesondere die voranstehend dargelegte Unterauchungsmethode einer Urinprobe zur Bestimmung des Bonn-Risk-Index in einer Arztpraxis oder in einer Klinik rationell und sicher durchgeführt werden kann. Die Vorrichtung sollte eine standardisierte und weitestgehend automatisierte Durchführung des Verfahrens bei gleichzeitig geringen Kosten ermöglichen.

Diese Aufgabe ist erfindungsgemäß gelöst durch eine Vorrichtung mit den Merkmalen des Anspruchs 1, und durch ein Verfahren zur Verwendung dieser Vorrichtung gemäß dem Anspruch 20.

Die Erfinder haben erkannt, dass zur Bestimmung des Kristallisationspunkts einer Flüssigkeitsprobe ein Titrationsystem in Verbindung mit einer optischen Transmissionsmessung verwendet werden kann. Die Messanordnung für die Transmissionsmessung sollte aber wiederum nicht die Notwendigkeit bedingen, ausschließlich Probengefäße für die Flüssigkeitsprobe, insbesondere für eine Urinprobe, hoher optischer Qualität verwenden zu müssen. Hieraus haben die Erfinder gefolgert, dass zwar ein Teilbereich der Flüssigkeitsprobe mit einem Lichtstrahl für Transmissionsmessungen zu durchleuchten ist, dass es andererseits aber unvorteilhaft ist, das Probengefäß selbst zu durchstrahlen.

Die Vorrichtung gemäß der Erfindung umfasst unter anderem einen Messkopf, der einen Lichtleiter umfasst und der in eine zu messende Flüssigkeitsprobe eingetaucht werden kann. Ein erstes Ende des Lichtleiters ist einer Lichtquelle zugeordnet. Ein Lichtsensor ist definiert zum vom Lichtleiter vorgegebenen Lichtweg des von der Lichtquelle ausgesandten Lichts angeordnet. Im eingetauchten Bereich des Messkopfs ist weiterhin eine Ausnehmung vorgesehen, welche den Lichtleiter derart unterbricht, dass wenigstens ein Teil des vom Lichtleiter geführten Lichts auf einer definierten Strecke die Flüssigkeitsprobe durchquert. Eine Eintrübung der zu untersuchenden Flüssigkeit, welche auf das Einsetzen der Kristallisation bei der definierten Zugabe einer Titrationsflüssigkeit in die Flüssigkeitsprobe durch ein Titrationssystem der Messvorrichtung zurückzuführen ist, ist dann aufgrund der ansteigenden Transmissionsverluste durch den Lichtsensor detektierbar.

Bevorzugt wird als Lichtquelle eine strahlförmige Lichtquelle verwendet, dies kann beispielsweise durch eine Blendenstruktur bei einer ausgedehnten Lichtquelle oder durch die Verwendung eines Lasers, etwa einer Laserdiode, bewirkt werden. Ferner ist in der vorliegenden Anmeldung der Begriff der Lichtquelle nicht nur auf den sichtbaren Wellenlängenbereich beschränkt, sondern es kann auch eine Quelle für elektromagnetische Strahlungen außerhalb des vom menschlichen Auge wahrgenommenen Bereichs verwendet werden, beispielsweise eine Infrarotlichtquelle. Bevorzugt wird sichtbares Licht, insbesondere im roten Spektralbereich, bevorzugt um 650 nm.

Als Lichtsensor wird ein zur Lichtquelle passendes Detektorsystem verwendet, dies kann beispielsweise ein Phototransistor, eine Photodiode oder ein Photowiderstand sein. Auch ist es denkbar, den Photosensor als Sensormatrix auszubilden, hierdurch kann der Fehlereinfluss durch die Justage der Sensoranordnung verringert werden.

Der Messkopf wird so ausgestaltet, dass er zwar mit den Enden des Lichtleiters der Lichtquelle und dem Lichtsensor zugeordnet ist, jedoch von diesen getrennt werden kann. Besonders bevorzugt wird die Verwendung eines Messkopfes, der im Sinne eines Einwegmesskopfes nur jeweils für eine Urinprobe verwendet wird. Durch ein solches Vorgehen ergibt sich insbesondere der Vorteil, dass der mit der Flüssigkeitsprobe in Berührung kommende Messkopf nach einer Messung nicht aufwendig zu reinigen ist. Außerdem muss dieser als Einwegteil nicht so ausgebildet sein, dass er sich für eine Vielzahl von Mess- und Reinigungsschritte eignet.

Bezüglich seiner geometrischen Gestaltung ist der Messkopf so ausgebildet, dass er in eine Urinprobe eintaucht und zwar wenigstens soweit, dass eine Ausnehmung im Messkopf, die vom Lichtstrahl durchquert wird, von der zu messenden Flüssigkeit, insbesondere dem Urin, befüllt wird. Außerdem wird bevorzugt, die Lichtquelle und den Lichtsensor so anzuordnen, dass diese nicht mit der Flüssigkeitsprobe in Berührung kommen, d. h. nur der die Flüssigkeitsprobe berührende Messkopf unterliegt einer Verschmutzung, welche aber insofern unbeachtlich ist, da es sich ohnehin um ein nach einer Messung auszutauschendes Teil handelt.

Eine mögliche Ausgestaltung des Messkopfs umfasst einen Lichtleiter mit wenigstens einer Einrichtung zur Strahlumlenkung. Hieraus erwächst die Möglichkeit, sowohl die Lichtquelle wie auch den Lichtsensor oberhalb des Flüssigkeitsspiegels des zu untersuchenden Urins zu positionieren. Als besonders vorteilhaft haben sich zwei in einem 45°-Winkel zur Horizontalen und einem 90°-Winkel zueinander stehenden Strahlumlenker erwiesen, so dass im Messkopf im Wesentlichen ein vertikal nach unten führender Strahlabschnitt gefolgt von einem im Wesentlichen horizontalen und einem im Wesentlichen vertikal nach oben gerichteten Strahlabschnitt ausgebildet ist. In wenigstens einem dieser Strahlabschnitte befindet sich die besagte Ausnehmung im Messkopf, so dass der Lichtstrahl im Wesentlichen frei in einem bestimmten Abschnitt durch die Flüssigkeitsprobe hindurchdringt, um über diese bekannte Wegstrecke Veränderungen bezüglich der Transmission zu detektieren.

Mit Hilfe der erfindungsgemäßen Vorrichtung ist es nun möglich, in Verbindung mit einem Dosierungssystem für den Kristallbildner jene Menge des Kristallbildners zu bestimmen, die zum Eintritt der Kristallisation führt. Als bevorzugter Kristallbildner für eine Probe wird eine Lösung verwendet die eine lithogene Komponente der Kristallart enthält, deren Kristallisationsrisiko bestimmt werden soll. Für eine Urinprobe wird als Kristallbildner eine Oxalat- oder Phosphatlösung bevorzugt.

Zur Vermessung der notwendigen Menge des Kristallbildners im Verhältnis zum Volumen der Flüssigkeitsprobe ist es notwendig, die vorliegende Flüssigkeitsmenge des zu untersuchenden Urins festzustellen. Dies kann generell bei bekanntem Gewicht des Probengefäßes mittels einer Wägevorrichtung bestimmt werden.

Alternativ kann generell zur Volumenbestimmung der Messflüssigkeit bei einer bekannten Form des Probengefäßes die geodätische Höhe des Flüssigkeitsspiegels im Probengefäß gemessen werden. Hierzu sind unterschiedliche Vorrichtungen denkbar, beispielsweise Feuchtigkeitssensoren, die ein offenes Elektrodenpaar aufweisen, zwischen dem durch die zu messende Flüssigkeit ein Kontakt hergestellt wird,was wiederum durch eine Widerstandsmessung detektierbar ist. Gemäß der Erfindung wird eine Einrichtung zur Bestimmung der geodätischen Höhe des Flüssigkeitsspiegels, welche mit dem Messkopf für die Transmissionsmessung in Verbindung steht. Der Messkopf ist dann wiederum mit einer Höheneinsteilvorrichtung verbunden, durch die es ermöglicht wird, den Messkopf von oben in das Probengefäß zu verfahren und somit in den Urin einzutauchen. Ist die Höheneinstellvorrichtung nun so ausgebildet, dass von einer bekannten Referenzhöhe aus der zurückgelegte Weg in vertikaler Richtung vermessen wird, so kann bei bekannter Lage des Flüssigkeitssensors die geodätische Höhe des Flüssigkeitsspiegels und somit das Flüssigkeitsvolumen im Probenaufnahmebehälter bestimmt werden.

Erfindungsgemäß wird zur Bestimmung der Lage des Flüssigkeitsspiegels der Urinprobe die Ausnehmung im Messkopf verwendet. Der zunächst freie Messkopf, d. h. in der für die -Transmissionsmessung vorgesehenen Ausnehmung findet sich keine Flüssigkeit, wird so lange vertikal nach unten in Richtung des Flüssigkeitsspiegels bewegt, bis die zu untersuchende Flüssigkeit in die Ausnehmung eindringt und die Transmission verändert. Aus der bekannten Lage der Ausnehmung und dem darin verlaufenden Lichtstrahl sowie der zurückgelegten Wegstrecke lässt sich dann die Lage des Flüssigkeitsspiegels bestimmen.

Der zur Berechnung des BRI notwendige Messwert für die freien Kalziumionen [Ca²⁺] wird in einer bevorzugten Weitergestaltung der Vorrichtung zur Untersuchung einer Urinprobe mit Hilfe eines geeigneten Sensorsystems bestimmt. In einer möglichen Ausgestaltung wird hierzu eine bestimmte Menge der unbehandelten Urinprobe aus dem Probengefäß entnommen und mittels eines Fluidiksystems einem Sensor für Ca²⁺-Ionen zugeführt. Dies kann beispielsweise ein Ionen selektiver Feldeffekttransistor sein, welcher eine Ionen selektive Membran umfasst. Vorzugsweise umfasst das Fluidiksystem auch eine Vorrichtung zum Einleiten von Spülflüssigkeiten zu Reinigungszwecken. Zusätzlich wird bevorzugt, zur Kalibrierung der Sensoren diesen eine Kalibrierlösung zuzuführen. Die hierfür notwendigen Pumpen, Behälter und Auffanggefäße sowie die zugehörige fluidische Steuerung ist im Ermessen des fachmännischen Könnens auszubilden.

Zur Steuerung der erfindungsgemäßen Vorrichtung kann diese interne oder externe Steuerungseinheiten entweder in Form von Mikrocontrollern oder extern angeschlossenen PCs umfassen, durch welche auch eine Schnittstelle für den Benutzer in Form von Eingabeeinheiten und Displays realisiert werden kann.

Bevorzugt hat der Messkopf eine Halteeinrichtung zur Halterung an einer Halteaufnhame der Vorrichtung, wobei die Halteeinrichtung ein Haltemittel, insbesondere eine Formschlusskomponente mit einer Sollbruchstelle, aufweist, welches so ausgeführt ist, dass nur eine einmalige Verwendung der Halteeinrichtung gegeben ist. Dies erzwingt die Einweg-Verwendung des Messkopfes. Eine versehentliche mehrmalige Verwendung eines Messkopfes, die aufgrund von Verunreinigungen zu verfälschten Ergebnissen führen kann, wird dadurch vermieden. Eine mehrmalige Verwendung des Messkopfs wird besonders sicher dann ausgeschlossen, wenn das Haltemittel nach der erstmaligen Verwendung der Halteeinrichtung zur Halterung unbrauchbar wird.

Bei einer Ausführungsvariante ist der Messkopf derart ausgeführt, dass er das von der Lichtquelle aufgenommene Licht zum Lichtsensor leitet. Auf diese Weise kann eine Transmissionsänderung der zu untersuchenden Flüssigkeitsprobe bestimmt werden.

Alternativ kann der Messkopf derart ausgeführt sein, dass er das von der Lichtquelle aufgenommene Licht längs eines Lichtweges leitet, zu dem der Sensor benachbart angeordnet ist, in dem der Sensor aber nicht direkt angeordnet ist. Eine derartige Messkopfgestaltung kann dazu genutzt werden, Streulicht, das von der Flüssigkeitsprobe erzeugt wird, zu messen.

Die Vorrichtung kann eine Antriebseinrichtung zur Bewegung des Messkopfs relativ zum Probengefäß aufweisen, wobei am Messkopf zumindest ein Teil einer Bestimmungseinrichtung zur Bestimmung des Flüssigkeitspegels der Flüssigkeitsprobe vorgesehen ist. Zur Erleichterung des Austausches des Probengefäßes ist es ohnehin von Vorteil, wenn der Messkopf relativ zum Probengefäß bewegbar ist. Diese Bewegung kann bei der vorstehend angesprochenen Weiterbildung gleichzeitig zur Flüssigkeitspegelbestimmung elegant genutzt werden.

Wenn die Ausnehmung im Messkopf einen Teil der Bestimmungseinrichtung darstellt, können die Lichtquelle und der Lichtsensor zusammen mit dieser Ausnehmung zur Flüssigkeitspegelbestimmung herangezogen werden, da sich die Lichtintensität des von der Lichtquelle ausgesandten und durch den Messkopf geleiteten Lichts beim Eintritt der Ausnehmung in die zu untersuchende Flüssigkeitsprobe ändert.

Im Messkopf kann ein Fluidkanal des Fluidsystems ausgeführt sein. Über den Messkopf kann dann zur Bestimmung eines Parameters der zu untersuchenden Flüssigkeitsprobe über den Fluidkanal ein Teil der Flüssigkeitsprobe angesaugt werden. Bei einem Austausch des Messkopfes wird dann auch dieser Ansaug-Fluidkanal mit ausgetauscht, was ein Reinhalten der Messvorrichtung erleichtert.

Bevorzugt ist der Fluidkanal über einen Dichtstopfen verschlossen, der in Messposition des Messkopfs von einem Leitungsabschnitt des messkopfaufnahmeseitigen Fluidsystems durchdrungen wird. Mit Hilfe eines derartigen Dichtstopfens ist ein sauberes Abdichten des Fluidkanals gegen den Leitungsabschnitt möglich.

Bei einer bevorzugten Weiterbildung ist ein Fluidkanal des Titrationssystems im Messkopf ausgeführt. Eine separate Titrations-Zuleitung in das Probengefäß kann dann entfallen.

Bevorzugt ist eine Rühreinrichtung zum Rühren der Flüssigkeitsprobe vorgesehen, wobei der Messkopf mindestens ein Strömungsbauteil, insbesondere mindestens einen Strömungsflügel, zum Zusammenwirken mit der Flüssigkeitsprobe aufweist. Hierdurch ist eine definierte Durchmischung der Flüssigkeitsprobe beim Rühren und damit eine reproduzierbare Untersuchung der Flüssigkeitsprobe gegeben.

Bei einer Variante der Messvorrichtung weist das Messsystem zur Konzentrationsbestimmung ein Spektrometer auf. Hierdurch ist eine zuverlässige und stoffselektive Konzentrationsbestimmung möglich.

Was das Verfahren angeht, so wird die Aufgabe der Erfindung einerseits gelöst durch ein Verfahren zur Untersuchung einer Flüssigkeitsprobe mittels Titration, welches die vorstehend beschriebene erfindungsgemäße Messvorrichtung verwendet.

Bevorzugt wird vor dem Eindosieren ein neuer Einweg-Messkopf eingesetzt. Dies gewährleistet, was den Messkopf angeht, besonders gut reproduzierbare Verfahrensbedingungen. Eine Reinigung eines schon benutzten Messkopfs entfällt.

Bevorzugt wird ein Konzentrationsbestimmungssensor vor der Konzentrationsbestimmung gereinigt und/oder kalibriert. Dies schafft definierte Verhältnisse bei der Konzentrationsbestimmung, sodass auch Konzentrationsbestimmungssensoren eingesetzt werden können, die zu Langzeitdrifts neigen.

Vor der Konzentrationsbestimmung kann die Flüssigkeitsprobe gerührt werden. Dies gewährleistet definierte Messbedingungen, da eine homogen verteilte Flüssigkeitsprobe vermessen wird.

Bevorzugt wird aus den gemessenen Werten der Konzentration und der Lichtdurchlässigkeit ein Probenparameter berechnet. Dies erlaubt die Angabe eines konzentrationsabhängigen Kristallisationspunktes durch einen einfachen Zahlenwert.

Bevorzugt wird zusätzlich der pH-Wert der Flüssigkeitsprobe bestimmt. Dies verschafft eine zusätzliche Information über die Beschaffenheit der Flüssigkeitsprobe.

Zudem kann die Temperatur der Flüssigkeitsprobe bestimmt werden. Dies kann insbesondere zur Korrektur der bestimmten Konzentration eingesetzt werden.

Mit Hilfe der Messvorrichtung können auch noch zusätzliche Flüssigkeitsparameter vermessen werden. Die Messvorrichtung kann bei einer vorteilhaften Weiterbildung als mobiles Labor zur Bestimmung einer Vielzahl von Flüssigkeitsparametern ausgeführt sein.

Derartige Flüssigkeitsparameter können sein:
Das spezifische Gewicht, der Gehalt an bzw. das Vorhandensein von Na, K, Mg, NH₄, Cl, PO₄, SO₄, Kreatin, Harnsäure, Leukozyten, Nitrid, Eiweiß, Proteine, Glucose, Keton, Urobilin, Billirubin, Urobillirubin, Erithorzyten, Hämoglobin. Zudem kann das Ausscheiden von Serumproteinen erfasst werden wie z.B. Albumin, Transferrin, Globiline, lmmunoglobuline und lmmunglobulinfragmente.

Die Erfindung wird anhand nachfolgender Figuren, die Ausführungsbeispiele zeigen, genauer beschrieben.
- Figur 1: zeigt das optische Messsystem zur Bestimmung des Kristallisationspunkts.
- Figur 2: zeigt einen Probenaufnahmebereich mit einem Probengefäß und einem Probenaufnahmeteller sowie dem optischen Messsystem gemäß Figur 1 und der zugehörigen Positionierungseinrichtung.
- Figur 3: zeigt das Dosierungssystem zur Titration.
- Figur 4: zeigt das Fluidiksystem.
- Figur 5: ist eine schematische Außenansicht des Messgeräts.
- Figur 6: zeigt eine zu Figur 1 ähnliche Ansicht eines alternativen Messkopfs für ein optisches Messsystem.
- Figur 7: zeigt eine Ansicht gemäß Sichtlinie VII in Figur 6.
- Figur 8: zeigt einen Schnitt gemäß Linie VIII-VIII in Figur 7.
- Figur 9: zeigt eine Ansicht gemäß Sichtlinie IX in Figur 6.
- Figur 10: zeigt eine Ansicht des Messkopfs nach Figur 6 von oben.
- Figur 11: zeigt einen Schnitt gemäß Linie XI-XI in Figur 9.
- Figur 12: zeigt schematisch einen Verfahrensablauf bei der Untersuchung einer Flüssigkeitsprobe mittels Titration.

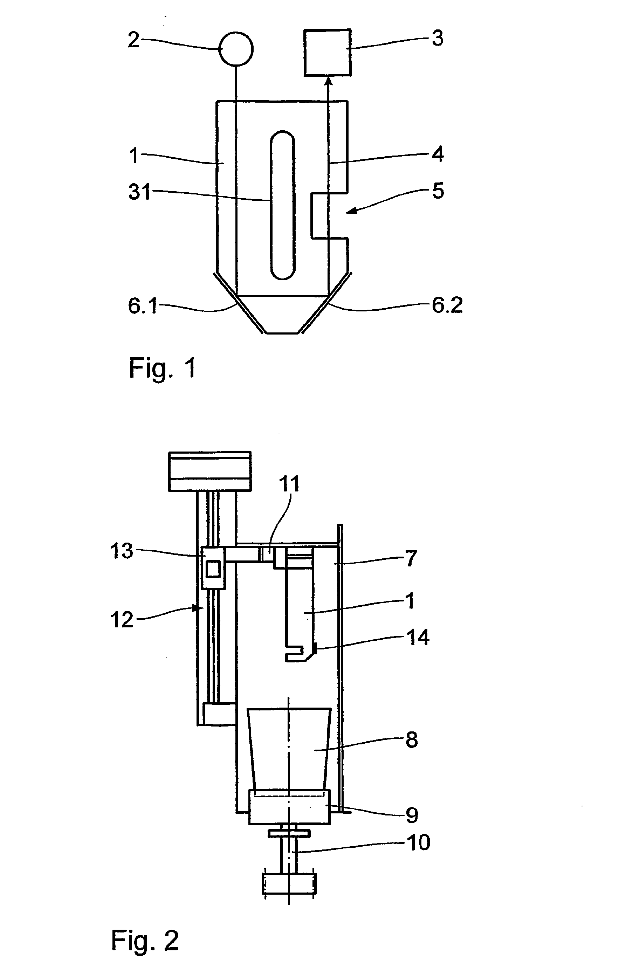

In Figur 1 ist schematisch das optische Messsystem für die Titration zur Bestimmung des Kristallisationspunkts gezeigt. Ein Messkopf 1 nimmt Licht von einer Lichtquelle 2 auf und leitet dieses zu einem Lichtsensor 3. Der Messkopf 1 ist als austauschbare Einheit, insbesondere als Einwegeinheit, ausgebildet. Außerdem erlaubt der Messkopf eine Anordnung der Lichtquelle 2 und des Lichtsensors 3 oberhalb des Spiegels der Flüssigkeitsprobe. Die hierfür notwendige Strahlumlenkung des Messkopfes kann beispielsweise gemäß Figur 1 durch zwei in einem 45°-Winkel zur Senkrechten und in einem Winkel von 180° zueinander stehenden Reflexionsflächen 6.1 und 6.2 erreicht werden. Weitere Ausgestaltungen sind denkbar, beispielsweise die Verwendung eines im Wesentlichen waagrechten reflektierenden Elements im Bodenbereich des Messkopfes und einer V-förmigen Strahlgestaltung. Bevorzugt ist, dass das Beleuchtungslicht die Lichtquelle mit einer vertikal nach unten weisenden Richtungskomponente verlässt und das Licht zum Lichtsensor mit einer vertikal nach oben weisenden Richtungskomponente zurückgeführt wird. Auf diese Art und Weise kann der Messkopf 1 in die Flüssigkeitsprobe eintauchen, ohne dass die Lichtquelle 2 und der Lichtsensor 3 beschmutzt werden.

Bevorzugt wird die Einkopplung eines im Wesentlichen strahlförmigen Lichtstrahls in den Messkopf. Besteht dieser dann aus einem für die verwendete Wellenlänge des Beleuchtungslichts transparenten Materials, beispielsweise PMMA (Polymethylmetaacrylat) oder Makrolon (Polycarbonat), die eine Transparenz für sichtbares Licht von 70-81 % aufweisen. Allgemein können alle im Spritzgussverfahren oder mit spanabhebenden Verfahren herstellbare Kunststoffe verwendet werden. Alternativ kann der Lichtleiter auch aus Glas bestehen. In den meisten Fällen kann für den Messkopf der Einfluss von Streulicht vernachlässigt werden und lediglich jene Außenbereiche, in denen eine Strahlumlenkung auftritt, sind dann vorteilhafterweise zu verspiegeln. Alternative Ausgestaltungen des Messkopfs beinhalten Glasfasern oder optische Fasern auf Polymerbasis zur Strahlführung. Weiterhin ist es denkbar, durch die geometrische Ausgestaltung des Messkopfes Bereiche gegenläufiger Strahlführung voneinander zu trennen. Dies kann beispielsweise durch eine Ausnehmung geschehen, die einen ersten Teilbereich des Messkopfs mit einer nach unten gerichteten Strahlführung von einem zweiten Teil trennt, bei dem die Strahlführung nach oben gerichtet ist. Aufgrund der Ausbildung einer Grenzfläche vom Material des Messkopfs zum offenen Bereich in der Ausnehmung wird ein die Messgenauigkeit verringerndes Übersprechen zwischen den einzelnen Bereichen der Strahlführung im Messkopf vermieden. Ein solch freier Bereich 31 ist in Figur 1 skizziert.

Zur Durchführung der Transmissionsmessungen ist es notwendig, über eine bestimmte Durchstrahlungsstrecke den Lichtleiter zu unterbrechen. Gemäß Figur 1 ist bevorzugt im Messkopf 1 eine Ausnehmung 5 vorzusehen, in die im eingetauchten Zustand die zu untersuchende Flüssigkeit eindringt. Diese Ausnehmung 5 und die darin befindliche Flüssigkeit werden dann vom ausgekoppelten Lichtstrahl durchquert. Dieser wird dann wieder in den Messkopf bzw. in den Lichtleiter des Messkopfes eingekoppelt und dem Lichtsensor 3 zugeführt.

Figur 2 zeigt in einem Längsschnitt den Probenaufnahmebereich 7 zur Aufnahme eines Probengefäßes 8 das auf einem Probenteller 9 positioniert ist. Der Probenteller 9 ist so gelagert, dass er eine möglichst waagrechte Unterlage für das Probengefäß 8 bietet, um die Lage des Flüssigkeitsspiegels möglichst exakt zu bestimmen. Ferner ist dem Probenteller 9 ein Motor 10 zugeordnet, um eine Rotationsbewegung zur Durchmischung der Flüssigkeitsprobe im Probengefäß 8 zu ermöglichen. In einer bevorzugten Ausgestaltung wird der Probenteller 9 indirekt angetrieben, dies kann beispielsweise durch einen magnetischen Antrieb erreicht werden. Durch diese Maßnahme ist es möglich, den Probenaufnahmebereich 7 aus Hygienegründen gegen den Außenbereich abzudichten. Insbesondere kann der Bereich 7 gehäuseseitig so ausgearbeitet sein, dass ein Austreten von Flüssigkeiten in den Geräteinnenbereich absolut ausgeschlossen wird.

Oberhalb des Probengefäßes 8 befindet sich im Probenaufnahmebereich 7 der Messkopf 1 zur Transmissionsmessung. Dieser ist an einem Messkopfträger 11 befestigt und kann in bevorzugter Weise im Sinne eines Einwegartikels mit einfachen Handgriffen ausgetauscht werden. Im Messkopf 11 sind bevorzugt die dauerhaft am Messsystem verbleibende Lichtquelle 2 und der Lichtsensor 3 angebracht. Außerdem ist in einer bevorzugten Ausgestaltung dem Messkopfträger ein Markierungs- und/oder Detektionssystem zugeordnet, mit dessen Hilfe ein Messkopf 1 als bereits benutzt erkannt wird bzw. das einen Messkopf beim Einspannen oder beim Eintauchen in die Flüssigkeitsprobe als benutzt markiert. In einer möglichen Ausgestaltung sind am Messkopf zwei abbrechbare Kunststoffpins angebracht, die beim Einsetzen in den Messkopfträger einen Schalter betätigen. Dabei brechen die Pins ab, so dass beim erneuten Gebrauch die Schalter nicht ausgelöst werden. Der Schalter gibt zwei Signale an die Elektronik. Das erste Signal ist von kurzer Dauer, das zweite Signal wird während des gesamten Messvorganges angelegt und dient gleichzeitig zur Positionskontrolle des Messkopfes.

Zur Positionierung des Messkopfs 1 steht der Messkopfträger 11 in Verbindung mit einem Positioniersystem 12, das im Wesentlichen eine Vertikalbewegung zum Eintauchen des Messkopfs 1 in die Flüssigkeitsprobe erlaubt.

Zur Durchführung der Untersuchung ist es notwendig, das Flüssigkeitsvolumen der Flüssigkeitsprobe im Probengefäß 8 zu ermitteln. Dies kann auf unterschiedliche Art und Weise bewirkt werden. Zum einen ist es möglich, das Volumen aus einer Gewichtsbestimmung des befüllten Probengefäßes 8 abzuleiten. Hierzu kann dem Probenteller 9 eine Wägeeinheit zugeordnet werden. Alternativ kann das Volumen bei bekannter Form des Probengefäßes durch die Bestimmung der geodätischen Höhe des Flüssigkeitsspiegels der Flüssigkeitsprobe im Probengefäß 8 gemessen werden. Besonders bevorzugt wird eine Ausgestaltung, bei der ein Flüssigkeitsdetektionssystem 14 mit dem Messkopf verbunden ist und dem Positioniersystem 12 für den Messkopf ein Positionsmesssystem 13 zugeordnet wird. Ausgehend von einem bestimmten Referenzpunkt kann dann die vom Messkopf 1 in vertikaler Richtung zurückgelegte Wegstrecke bis zum Erreichen des Flüssigkeitsspiegels zur Volumenbestimmung der Flüssigkeitsprobe im Probengefäß 8 herangezogen werden. In einer möglichen Ausgestaltung umfasst das Positionsmesssystem 13 Anlageschalter für die Referenzposition. Diese können beispielsweise als Hall-Sensoren ausgebildet sein.

Weiterhin kann die zurückgelegte Wegstrecke des Messkopfs bei der Positionierung durch einen geeigneten Sensor, etwa ein Drehratensensor oder einen Linearmaßstab ermittelt werden. Wird als Antrieb ein Schrittmotor gewählt, so entfällt die Notwendigkeit, zusätzliche Sensoren zur Bewegungsermittlung einzusetzen.

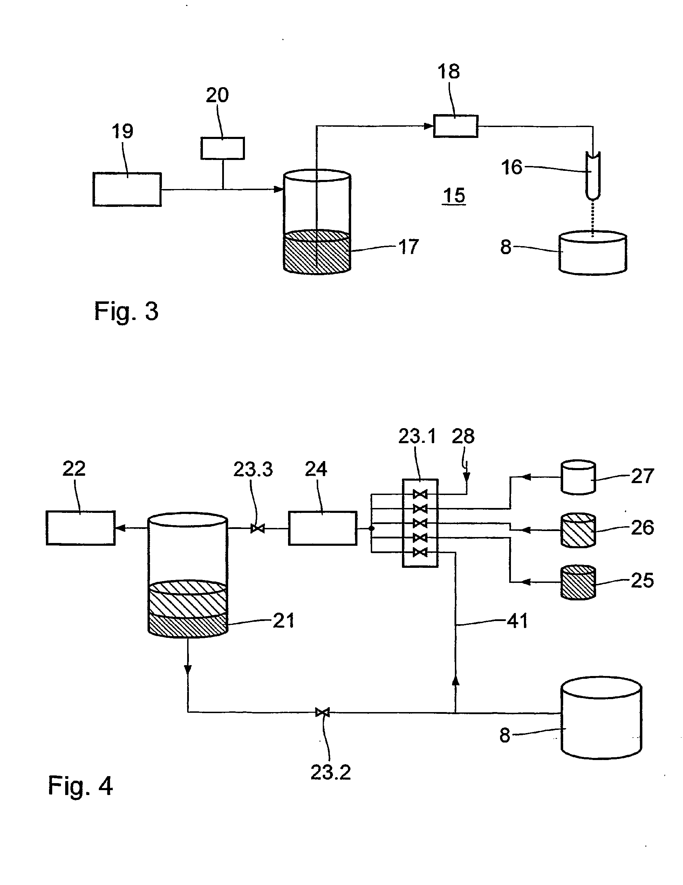

Figur 3 zeigt in schematisch vereinfachter Art und Weise das dem Titrationssystem zugeordnete Dosierungssystem zur Eindosierung eines Kristallbildners in die Flüssigkeitsprobe. Zum Bewirken einer Kalziumoxalat-Kristallisation wird bevorzugt eine 0,04 N Ammoniumoxalat-Lösung als Kristallbildner zugegeben. Ist stattdessen eine Kalziumphosphat-Kristallisation im menschlichen Urin zu untersuchen, so wird die Ammoniumoxalat-Lösung durch eine Phosphatlösung ersetzt. In einer möglichen Ausgestaltung des Dosierungssystems erfolgt die kontrollierte und volumengenaue Zugabe des Kristallbildners durch die Beaufschlagung eines Betriebsmittelbehälters, in dem sich der Kristallbildner befindet, mit einem genau vorgegebenen Überdruck. Dieser wird durch einen Pumpe 19 erzeugt und von einem Drucksensor 20 überwacht. Durch ein in die unter Druck stehende Flüssigkeit im Betriebsmittelbehälter 17 eintauchendes Entnahmerohr wird der Kristallbildner über den Filter 18 einer Düse 16 zugeleitet, von der aus dann die kontrollierte Zugabe des Kristallbildners in das Probengefäß 8 und die darin befindliche Flüssigkeitsprobe erfolgt. Alternativ kann anstatt der Druckbeaufschlagung des Betriebsmittelbehälters 17 die Eindosierung des Kristallbildners mittels einer in Figur 3 nicht dargestellten Dosierpumpe durchgeführt werden. Auch andere volumengenaue Zugabeverfahren sind zur Durchführung des Messverfahrens wählbar. Bevorzugt wird, die Flüssigkeitsprobe während des Eindosierungsvorgangs zu rühren. Dies kann durch ein Drehen des Probengefäßes bewirkt werden, wobei der in die Flüssigkeitsprobe eingetauchte Messkopf 1 dann im Sinne eines Strombrechers wirkt.

Figur 4 zeigt das Fluidiksystem in schematisch vereinfachter Art und Weise der Messvorrichtung. Es dient dazu, weitere Parameter der Flüssigkeitsprobe zu untersuchen, im Fall von Urin ist insbesondere der Gehalt an freien Kalziumionen von Interesse. Zusätzlich können auch die Urintemperatur und der pH-Wert bestimmt werden. Hierzu wird eine bestimmte Fraktion der Flüssigkeitsprobe dem Probengefäß entnommen, dies kann automatisiert erfolgen oder durch den Benutzer geschehen, und dem Fluidiksystem zugeleitet, wobei die Leitungen dieses Fluidiksystems einen Unterdruck aufweisen, so dass durch eine Schaltung der Ventile 23.1, 23.2 und 23.3 eine Führung des Flüssigkeitstransports bis zum Zwischenbehälter 21 bewirkt werden kann. In diesem wird der benötigte Unterdruck durch eine Pumpe 22 für Luft erzeugt. Durch diese Maßnahme kann sowohl die Flüssigkeitsprobe wie auch weitere Flüssigkeiten, etwa eine erste Kalibrierlösung 27 und eine zweite Kalibrierlösung 26 sowie eine Reinigungslösung 25 durch den Sensorblock 24 geleitet werden. Auch eine Belüftung der Kanäle zu Reinigungszwecken über die Luftzufuhr 28 ist möglich. Alternativ zur Anwendung eines Unterdrucks im Fluidiksystem kann zum Flüssigkeitstransport eine Pumpe, etwa eine Schlauchpumpe, eingesetzt werden. Diese Ausgestaltung ist in Figur 4 nicht mehr dargestellt.

Im Sensorblock 24 werden bevorzugt Ionen selektive Feldeffekttransistoren (ISFET) verwendet, deren lonenselektivität durch die Wahl einer geeigneten Membran bewirkt wird. Zusätzlich in vorteilhafter Weise verwendete Sensoren sind ein pH-Sensor und ein Temperatursensor.

In Figur 4 sind die Einzelheiten der Signal- und Steuerungsführung nicht dargestellt. Einer Steuerung der Vorrichtung kann beispielsweise durch einen oder mehrere Mikrocontroller bewirkt werden, wobei diese auch die Signale der Sensoren verarbeiten können. Das Messsystem kann als autarke Einheit ausgebildet sein, es ist aber auch denkbar, bestimmte Steuerungsaufgaben und Aufgaben, etwa zur Ausbildung einer Benutzerschnittstelle oder für Druckfunktionen, an ein externes Steuergerät bzw. einen PC auszulagern.

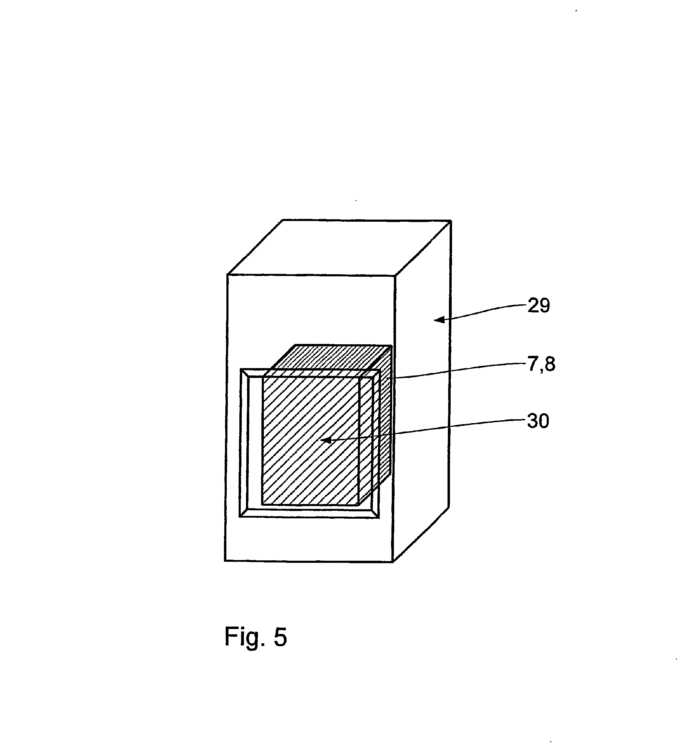

In Figur 5 ist eine Gesamtansicht der Messvorrichtung gezeigt. Dargestellt ist ein Gehäuse, in dem das Transmissionsmesssystem mit den austauschbaren Messköpfen und das Dosierungssystem zur Durchführung von Titrationsmessungen untergebracht sind. Zusätzlich umfasst die Vorrichtung ein Fluidiksystem zur Probenentnahme mit weiteren Sensorelementen, insbesondere zur Messung des Gehalts an freien Kalziumionen sowie des pH-Werts und der Temperatur der Flüssigkeitsprobe. Für einen Benutzer ist lediglich der Probenaufnahmebereich zum Einführen eines Probengefäßes zugänglich. Dieser Probenaufnahmebereich ist bevorzugt in Edelstahl ausgeführt, so dass eine leichte Reinigung möglich ist. Weiterhin wird eine Ausgestaltung bevorzugt, bei der wenigstens Teilbereiche des Probenaufnahmebereichs 7 mit einer Titanoxidschicht bedeckt sind. Diese hat insbesondere in Verbindung mit einer UV-Bestrahlung antibakterielle Wirkung, so dass eine automatische Desinfektion des Probenaufnahmebereichs durchgeführt werden kann. Ist zu diesem Zwecke eine UV-Lichtquelle im Bereich des Probenaufnahmebereichs 7 integriert, so wird bevorzugt, zum Schutz des Benutzers den Probenaufnahmebereich mit einem UV-dichten Türelement zu verschließen.

Neben der Anwendung der erfindungsgemäßen Vorrichtung zur Untersuchung von menschlichem Urin, insbesondere zur Bestimmung des BRI, ist eine Untersuchung einer Vielzahl von unterschiedlichen Flüssigkeiten möglich, bei denen durch die Zugabe einer Substanz eine Veränderung der Transmissionseigenschaften bewirkt wird und für welche eine quantitative Bestimmung dieser Transmissionsveränderung durchzuführen ist.

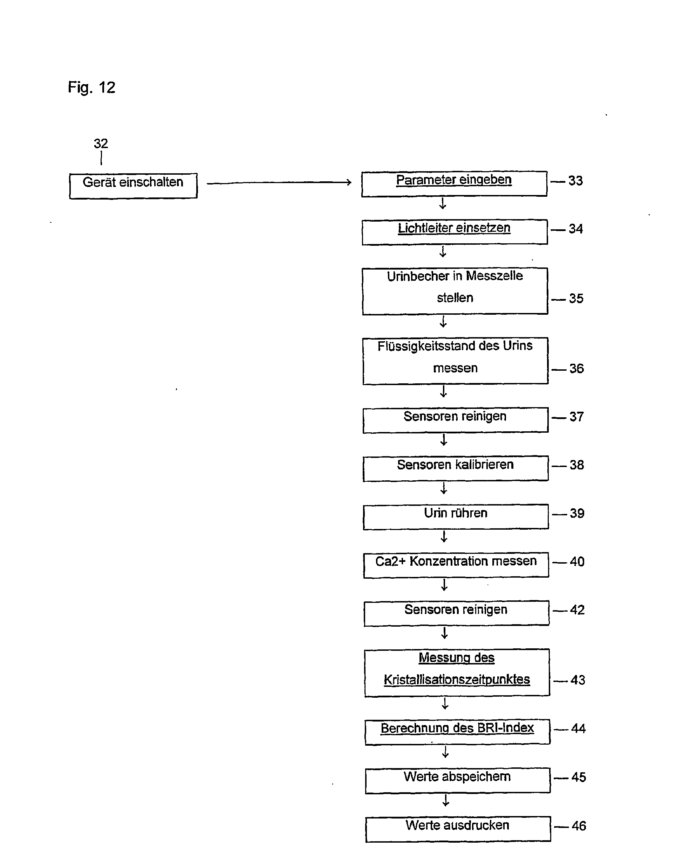

In Figur 12 ist ein Ablaufschema zur Durchführung des Verfahrens zur Untersuchung einer Flüssigkeitsprobe am Beispiel einer menschlichen Urinprobe mittels Titration dargestellt.

In einem Vorbereitungsschritt 32 wird die Messvorrichtung eingeschaltet. In einem Eingabeschritt 33 findet dann die Eingabe von Startparametern, zum Beispiel eines Identifizierungscode des Patienten, über eine alphanumerische Tastatur statt. Die eingegebenen Parameter kann der Benutzer über eine LCD-Anzeige der Messvorrichtung kontrollieren. Nach der Parametereingabe wird in einem Montageschritt 34 der Messkopf 1 in eine entsprechende Messkopfaufnahme der Messvorrichtung eingesetzt. Der Messkopf 1 weist einen nicht dargestellten Kontaktstift auf, der mit einem entsprechenden Kontakt in der Montageaufnahme der Messvorrichtung zusammenwirkt. Sofern der Messkopf in der Aufnahme nicht korrekt positioniert ist, gibt die Messvorrichtung auf der LCD-Anzeige automatisch eine Fehlermeldung aus. In einem Bereitstellungsschritt 35 wird dann das Probengefäß 8 mit der Flüssigkeitsprobe auf den Probenteller 9 gestellt und nachfolgend wird das Türelement 30 geschlossen. Auch die Schließposition des Türelements 30 wird über eine entsprechende Kontaktierung von der Messvorrichtung geprüft. Bei nicht korrekt geschlossenem Türelement 30 gibt das Messprogramm eine Fehlermeldung aus. Anschließend wird die Messung automatisch gestartet. In einem Pegelmessschritt 36 wird anschließend der Flüssigkeitspegel der Flüssigkeitsprobe gemessen. Hierzu wird der Messkopf 1 aus einer definierten Nullposition heraus mit Hilfe des Positioniersystems 12, das eine Gewindespindel umfasst, von oben in das Probengefäß mit der Flüssigkeitsprobe eingefahren. Mit Hilfe des Positionsmesssystems 13 wird der zurückgelegte Hub über die Anzahl der Umdrehungen der Gewindespindel genau vermessen. Sobald die Ausnehmung 5 von der Flüssigkeitsprobe benetzt wird, sobald also die Unterkante der Ausnehmung 5 auf Höhe des Flüssigkeitspegels ist, ändert sich die Intensität des auf den Lichtsensor 3 fallenden Strahls, da sich einerseits die Brechungsverhältnisse an den Grenzflächen der Ausnehmung 5 ändern und da andererseits der Lichtstrahl durch die Flüssigkeit zumindest teilweise geschwächt wird. Die durch das Erreichen des Flüssigkeitspegels hervorgerufene Intensitätsänderung wird durch den Lichtsensor 3 erfasst. Sobald eine definierte Änderung eingetreten ist, sobald zum Beispiel die gemessene Intensität weniger als 98 % der Ausgangsintensität erreicht, wird die Momentanposition der Gewindespindel vom Positionsmesssystem 13 erfasst. Auf diese Weise kann der Flüssigkeitspegel der Flüssigkeitsprobe im Probengefäß 8 genau bestimmt werden und aus der Höhe des Flüssigkeitspegels und dem dann bekannten Flüssigkeitsvolumen im Probengefäß 8 auf die Probenmenge geschlossen werden.

Nun erfolgt ein Reinigungsschritt 37 zur Vorbereitung der Konzentrationsbestimmung. Hierzu wird die Reinigungslösung 25 kurzzeitig am Sensorblock 24 vorbeigeführt. Die Reinigungslösung 25 bleibt dann kurzzeitig im Fluidiksystem stehen, sodass Bakterien abgetötet werden können. Dieses Vorbeiführen und Stehenlassen der Reinigungslösung 25 wird während des Reinigungsschrittes 37 mehrfach wiederholt. Bei längerer Nichtbenutzung der Messvorrichtung kann es auch erforderlich sein, weitere Leitungsbereiche des Fluidiksystems und nicht nur den Sensorblock 24 zu reinigen.

In einem anschließenden Kalibrierschritt 38 wird der Sensorblock 24 kalibriert. Hierzu werden ein Ca-lonen-Sensor und der pH-Sensor des Sensorblocks 24 mit der ersten Kalibrierlösung 27 in Kontakt gebracht. Die erste Kalibrierlösung 27 wird kurzzeitig an den Sensoren des Sensorblocks 24 vorbeigezogen. Sobald die Sensor-Messwerte stabil sind, was das Messprogramm anhand einer geringen Variation aufeinanderfolgender Messwerte erkennt, werden die Messwerte gespeichert. Anschließend wird dieser Vorgang innerhalb des Kalibrierschritts 38 mit der zweiten Kalibrierlösung 26 wiederholt. Aus den so ermittelten Sensor-Messwerten bei den beiden unterschiedlichen Kalibrierflüssigkeiten 26, 27 ermittelt das Messprogramm die erforderlichen Kalibrierparameter zur Ca-Konzentrationsbestimmung und zur pH-Wertbestimmung. Die nachfolgend erhobenen Messwerte werden mit Hilfe der gewonnenen Kalibrierparameter korrigiert.

Nachfolgend wird in einem Rührschritt 39 die Flüssigkeitsprobe im Probengefäß 8 gerührt. Hierzu wird der Probenteller 9 mit dem Probengefäß 8 in gleichmäßige Drehung um die Hochachse des Probengefäßes 8 versetzt. Während des Rührschritts 39 wird der Messkopf 1 noch weiter in die Flüssigkeitsprobe abgesenkt und wirkt daher als Rührer.

In einem nachfolgenden Konzentrationsbestimmungsschritt 40 wird ein Teil der Flüssigkeitsprobe aus dem Probengefäß 8 über eine Zufuhrleitung 41 (vergleiche Figur 4) aus dem Probengefäß 8 in den Sensorblock 24 gesaugt. Das angesaugte Probenvolumen wird kurzzeitig am Sensorblock 24 vorbeigeführt. Nach dem Abwarten einer Einstellzeit des Ca-Sensors des Sensorblocks 24 wird die Ca²⁺-Konzentration mit dem Ca-Sensor des Sensorblocks 24 gemessen. Der pH-Wert wird mit dem pH-Sensor des Sensorblocks 24 gemessen. Die Temperatur wird mit dem Temperatur-Sensor gemessen. Der Temperatur-Wert dient dazu, den Ca-Konzentrationswert mit Hilfe des Messprogramms zu korrigieren.

Nun erfolgt ein weiterer Reinigungsschritt 42 für den Sensorblock 24. Der Reinigungsschritt 42 entspricht dem Reinigungsschritt 37.

In einem Kristallisations-Messschritt 43 wird vorbereitend zunächst das Probengefäß 8 mit Hilfe des Motors 10 des Probentellers 9 gleichmäßig gedreht, sodass eine gut durchmischte Flüssigkeitsprobe vorliegt. Anschließend wird die Lichtquelle 2 eingeschaltet und es wird die Intensität des am Lichtsensor 3 ankommenden Lichts der Lichtquelle 2 gemessen. In bestimmten Zeitabständen, zum Beispiel in Abständen von jeweils einer Minute oder auch in Abständen von einigen Sekunden wird über das Dosierungssystem 15 aus dem Betriebsmittelbehälter 17 eine bestimmte Menge Ammoniumoxalat eingespritzt beziehungsweise titriert. Aus der vorbekannten Konzentration der Ammoniumoxalat-Lösung berechnet das Messprogramm die insgesamt eingespritzte Menge Ammoniumoxalat. Die Titration wird beim Kristallisations-Messschritt 43 solange fortgesetzt, bis eine Calciumoxalat-Kristallisation einsetzt. Der Kristallisationspunkt ist erkennbar an einer Eintrübung der Flüssigkeitsprobe und einer damit verbundenen geringeren Lichtintensität am Lichtsensor 3. Als Kristallisationspunkt kann beispielsweise der Titrationszeitpunkt festgelegt werden, an dem die gemessene Lichtintensität am Lichtsensor 3 98 % der Lichtintensität zu Beginn der Titration hat. Beim Kristallisations-Messschritt 43 kann auf diese Weise die zum Erreichen des Kristallisationspunktes erforderliche Menge des zugegebenen Ammoniumoxalats über die Minderung der am Lichtsensor 3 gemessenen Lichtintensität mit einer Genauigkeit von zum Beispiel +/- 0,2 ml bei einer Titrationsgeschwindigkeit von 40 mmol/l gemessen werden.

Anschließend erfolgt die Berechnung des BRI-lndex in einem Berechnungsschritt 44. Hierzu wird zunächst aus der Flüssigkeitsmenge der Flüssigkeitsprobe und der bis zum Kristallisationspunkt zugegebenen Menge Ammoniumoxalat die Oxalat-Menge berechnet. Der BRI-Index ergibt sich wie eingangs der Beschreibung erwähnt als Quotient der im Konzentrationsbestimmungsschritt 40 bestimmten Ca²⁺-Konzentration geteilt durch die Oxalat-Menge. Als Oxalat-Menge wird in medizinischen Kreisen die Konzentration an Oxalat (Ox²⁻) bezogen auf ein Probenvolumen von 200 ml verstanden.

In einem nachfolgenden Speicherschritt 45 werden dann insbesondere folgende Werte abgespeichert: ein Identifikationscode des Patienten, das Datum, die Uhrzeit, die gemessene Temperatur, die gemessene Ca²⁺-Konzentration, der gemessene pH-Wert, der aus den Messdaten berechnete BRI-Index, die jeweiligen Einzel-Messwerte der Sensoren des Sensorblocks 24, eventuell aufgetretene Fehlermeldungen. Als Speichermedium dient insbesondere eine Kompakt-Flash-Karte. Zu Wartungs- oder Überwachungszwecken kann das Speichermedium auf einen Wartungs- oder Überwachungsrechner über eine Ausleseschnittstelle übertragen werden.

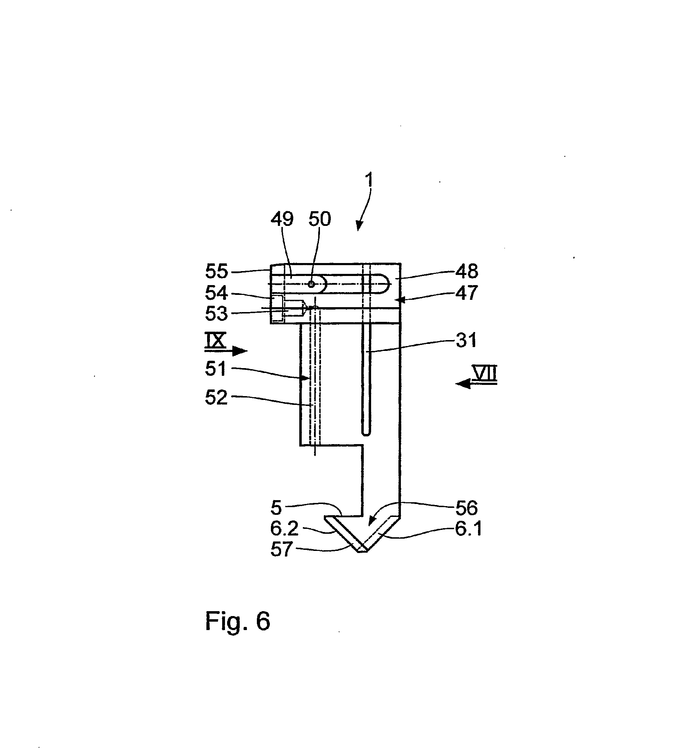

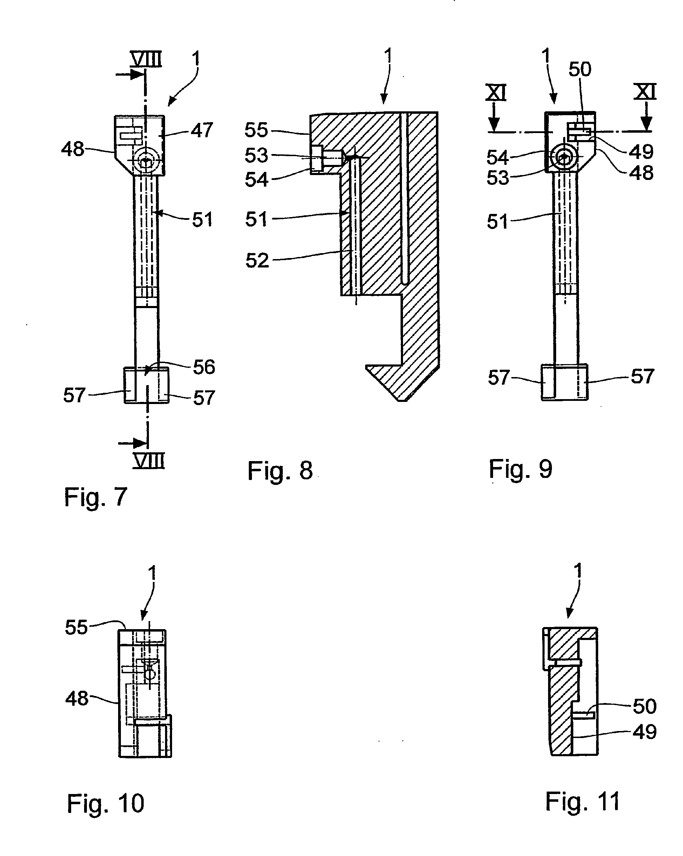

In einem abschließenden Druckschritt 46 werden die gewünschte Daten der gemessenen, berechneten oder gespeicherten Werte ausgedruckt. Hierzu können die gespeicherten Informationen auf einen Rechner übertragen werden, zum Beispiel über eine USB-Schnittstelle. Dort können die Daten weiterverarbeitet werden.
Ein zum in Figur 1 dargestellten Messkopf 1 alternativer Messkopf ist in den Figuren 6 bis 11 dargestellt. Komponenten dieses Messkopfs, die denjenigen entsprechen, die vorstehend schon unter Bezugnahme auf die Figuren 1 bis 5 beziehungsweise unter Bezugnahme auf die Verfahrensbeschreibung nach Figur 12 beschrieben wurden, tragen die gleichen Bezugszeichen und werden nicht nochmals im Einzelnen erläutert. Der alternative Messkopf 1 weist im in Figur 6 oberen Halteabschnitt 47 in einer Seitenwand 48 eine horizontal verlaufende und in Figur 6 nach links offene Haltenut 49 auf. Die Haltenut 49 ist Bestandteil einer Halteeinrichtung zur Halterung des alternativen Messkopfs 1 in einer Halteaufnhame der Messvorrichtung. Die Halteaufnahme weist dabei eine zur Haltenut 49 komplementäre Halterippe auf, die in der Zeichnung nicht dargestellt ist. Ein weiterer Bestandteil der Halteeinrichtung ist ein in der Haltenut 49 angeordneter Haltepin 50, der sich in Figur 6 horizontal und quer zur Erstreckungsrichtung der Haltenut 49 erstreckt. In der Halteaufnahme der Messvorrichtung wirkt der Haltepin 50 mit einer hierzu korrespondierenden Halteöffnung der Messvorrichtung zusammen.

Im alternativen Messkopf 1 ist ein Fluidkanal 51 ausgeführt, der bei montiertem alternativen Messkopf 1 mit der Zufuhrleitung 41 des Fluidiksystems in Fluidverbindung steht. Der Fluidkanal 51 erstreckt sich in einem ersten Kanalabschnitt 52 von einer oberen, in Figur 6 horizontalen Begrenzungswand der Ausnehmung 5 nach oben bis in den Halteabschnitt 47. Dort weist der Fluidkanal 51 eine 90°-Umlenkung auf, wobei er sich im Anschluss an diese Umlenkung zunächst verengt und dann in einen zweiten Kanalabschnitt 53 konusförmig erweitert. Über eine nachfolgende stufenförmige Erweiterung 54 mündet der zweite Kanalabschnitt aus einer in Figur 6 linken Seitenwand 55 des alternativen Messkopfs 1 aus.

Bevor der alternative Messkopf 1 eingesetzt wird, ist der Fluidkanal 51 über einen nicht dargestellten Dichtstopfen verschlossen, der dicht in die Erweiterung 54 eingesetzt ist. In der Messposition des alternativen Messkopfs 1, in der dieser in der Halteaufnahme der Messvorrichtung aufgenommen ist, wird der Dichtstopfen von einem Leitungsabschnitt der Zufuhrleitung 41 des messkopfaufnahmeseitigen Fluidsystems durchdrungen. Dieser Leitungsabschnitt wird durch eine handelsübliche Injektionsnadel gebildet. Nach dem Durchstoßen des Dichtstopfens mit dem Leitungsabschnitt dichtet der Dichtstopfen den Leitungsabschnitt gegen die Innenwand der Erweiterung 54 ab, sodass eine nach außen abgedichtete Fluidverbindung des Fluidkanals 51 zur Zufuhrleitung 41 gegeben ist.

In einem in Figur 6 unteren Umlenkabschnitt 56 sind die beiden Strahlumlenkungen 6.1, 6.2 einander direkt benachbart, sodass der Umlenkbereich 56 die Form einer auf dem Kopf stehenden Dachkante hat. An die beiden Umlenkungen 6.1, 6.2 ist jeweils an einer Seite überstehend ein Stömungsflügel 57 einstückig angeformt. Die beiden Strömungsflügel 57 dienen als Strömungsbauteile, die beim Rühren der Flüssigkeitsprobe zum Durchmischen mit dieser zusammenwirken.

Beim Einsetzen des alternativen Messkopfs 1 in die Messposition rastet der Haltepin 50 in die zugehörige Öffnung der Halteaufnahme der Messvorrichtung ein. Die Öffnung ist dabei so gestaltet, dass beim nach erfolgter Messung geschehendem Abnehmen des Messkopfs der Haltepin 50 an einer Sollbruchstelle vom Halteabschnitt 47 wegbricht. Da der Haltepin 50 eine Haltefunktion hat, ist nach dem Wegbrechen eine weitere Verwendung des alternativen Messkopfs nicht mehr möglich.

Beim alternativen Messkopf 1 dient die Ausnehmung 5, wie oben im Zusammenhang mit dem Ablaufschema nach Figur 12 beschrieben, zur Bestimmung des Flüssigkeitspegels der Flüssigkeitsprobe. Die Aufnahme 5 bildet daher zusammen mit dem Positioniersystem 12, dem Positionsmesssystem 13, der Lichtquelle 2, dem Lichtsensor 3 sowie den Stahlumlenkungen 6.1, 6.2 eine Bestimmungseinrichtung zur Bestimmung des Flüssigkeitspegels der Flüssigkeitsprobe.

Die beiden Messkopf-Varianten, die in Figur 1 einerseits und in den Figuren 6 bis 11 andererseits dargestellt sind, sind jeweils derart ausgeführt, dass sie von der Lichtquelle 2 aufgenommenes Licht direkt zum Lichtsensor 3 leiten. Bei einer weiteren, nicht dargestellten Messkopf-Variante ist dieser so gestaltet, dass er das von der Lichtquelle 2 aufgenommene Licht längs eines Lichtwegs leitet, zu dem der Lichtsensor 3 benachbart angeordnet ist, wobei der Sensor aber nicht direkt im Lichtweg angeordnet ist. In diesem Fall mißt der Lichtsensor 3 keine Transmissionsänderungen, die durch die beginnende Kristallisation der Flüssigkeitsprobe hervorgerufen werden, sondern Änderungen in der hierdurch hervorgerufenen Streulichtintensität. Der Lichtsensor 3 kann beispielsweise so angeordnet sein, dass er bei nichtstreuender Flüssigkeitsprobe zunächst keine Lichtintensität von der Lichtquelle 2 misst. Erst durch die aufgrund der beginnenden Kristallisation hervorgerufene Streuung gelangt Streulicht hin zum Lichtsensor 3, der dann entsprechend empfindlich ausgelegt sein kann, sodass er bereits kleine Streulichtmengen erfassen kann.

Bei einer weiteren, nicht dargestellten Messkopf-Variante ist ein Fluidkanal des Dosierungs- beziehungsweise Titrationssystems 15 mit der Düse 16 im Messkopf ausgeführt.

Bei einer weiteren Messkopf-Variante wird anstelle des Sensorblocks 24 zur Ca²⁺-Konzentrationsbestimmung im Konzentrationsbestimmungsschritt 40 ein Spektrometer eingesetzt. Hierzu wird der Teil der Flüssigkeitsprobe, dessen Ca²⁺-Konzentration bestimmt werden soll, mit Licht verschiedener Wellenlängen durchstrahlt, wobei anhand der Absorption der Flüssigkeit bei bestimmten Wellenlängen auf das Vorhandensein von Ca-Ionen in einer entsprechenden Konzentration geschlossen wird.

### Bezugszeichenliste

- 1: Messkopf
- 2: Lichtquelle
- 3: Lichtsensor
- 4: Lichtweg
- 5: Ausnehmung
- 6.1, 6.2: Strahlumlenkung
- 7: Probenaufnahmebereich
- 8: Probengefäß
- 9: Probenteller
- 10: Motor
- 11: Messkopfträger
- 12: Positioniersystem
- 13: Positionsmesssystem
- 14: Flüssigkeitsdetektionssystem
- 15: Dosierungssystem
- 16: Düse
- 17: Betriebsmittelbehälter
- 18: Filter
- 19: Pumpe
- 20: Drucksensor
- 21: Zwischenbehälter
- 22: Pumpe für Luft
- 23: Ventile
- 24: Sensorblock
- 25: Reinigungslösung
- 26: erste Kalibrierlösung
- 27: zweite Kalibrierlösung
- 28: Luftzufuhr
- 29: Gehäuse
- 30: Türelement
- 31: offener Bereich im Messkopf
- 32: Vorbereitungsschritt
- 33: Eingabeschritt
- 34: Montageschritt
- 35: Bereitstellungsschritt
- 36: Pegelmessschritt
- 37: Reinigungsschritt
- 38: Kalibrierschritt
- 39: Rührschritt
- 40: Konzentrationsbestimmungsschritt
- 41: Zufuhrleitung
- 42: Reinigungsschritt
- 43: Kristallisations-Messschritt
- 44: Berechnungsschritt
- 45: Speicherschritt
- 46: Druckschritt
- 47: Halteabschnitt
- 48: Seitenwand
- 49: Haltenut
- 50: Haltepin
- 51: Fluidkanal
- 52: erster Kanalabschnitt
- 53: zweiter Kanalabschnitt
- 54: Erweiterung
- 55: Seitenwand
- 56: Umlenkabschnitt
- 57: Strömungsflügel

## Patentansprüche

1. Vorrichtung zur Untersuchung einer Flüssigkeitsprobe mittels Titration, umfassend
1.1 eine Lichtquelle (2);
1.2 einen Lichtsensor (3);
1.3 einen in die zu untersuchende Flüssigkeitsprobe eintauchbaren Messkopf (1) mit einem Lichtleiter, der Licht von der Lichtquelle (2) aufnimmt und leitet, wobei der Messkopf (1) eine Ausnehmung (5) mit einer Unterbrechung des Lichtleiters aufweist, in die bei einem eingetauchten Messkopf (1) die zu untersuchende Flüssigkeit eindringt;
1.4 wobei der Messkopf (1) von der Lichtquelle (2) und dem Lichtsensor (3) getrennt werden kann; und
1.5 ein Titrationssystem zur definierten Zugabe einer Titrationsflüssigkeit in die Flüssigkeitsprobe,
1.6 eine Bestimmungseinrichtung zur Bestimmung des Flüssigkeitspegels der Flüssigkeitsprobe durch Messung einer Transmissionsänderung des Lichts der Lichtquelle (2); **gekennzeichnet durch**
- eine Antriebseinrichtung (12) zur Bewegung des Messkopfs (1) relativ zu einem Probengefäß (8), wobei am Messkopf zumindest ein Teil der Bestimmungseinrichtung (2, 3, 5, 6.1, 6.2, 12, 13) zur Bestimmung des Flüssigkeitspegels der Flüssigkeitsprobe vorgesehen ist,
- wobei die Ausnehmung (5) ein Teil der Bestimmungseinrichtung (2, 3, 5, 6.1, 6.2, 12, 13) darstellt.

2. Vorrichtung zur Untersuchung einer Flüssigkeitsprobe nach Anspruch 1, **dadurch gekennzeichnet, dass** die Vorrichtung ein Messsystem zur Messung des pH-Werts der Flüssigkeitsprobe umfasst.

3. Vorrichtung zur Untersuchung einer Flüssigkeitsprobe nach Anspruch 1 oder 2, **dadurch gekennzeichnet, dass** die Vorrichtung ein Temperaturmesssystem zur Messung der Temperatur der Flüssigkeitsprobe umfasst.

4. Vorrichtung zur Untersuchung einer Flüssigkeitsprobe nach wenigstens einem der Ansprüche 1 bis 3, **dadurch gekennzeichnet, dass** die Vorrichtung ein Fluidiksystem zur definierten Entnahme einer Menge der zu untersuchenden Flüssigkeit umfasst.

5. Vorrichtung zur Untersuchung einer Flüssigkeitsprobe nach Anspruch 4, **dadurch gekennzeichnet, dass** das Fluidiksystem eine Vorrichtung zur Kalibrierung mit mindestens einer Kalibrierflüssigkeit umfasst.

6. Vorrichtung zur Untersuchung einer Flüssigkeitsprobe nach Anspruch 4 oder 5, **dadurch gekennzeichnet, dass** das Fluidiksystem Mittel zur Reinigung umfasst.

7. Vorrichtung zur Untersuchung einer Flüssigkeitsprobe nach Anspruch 6, **dadurch gekennzeichnet, dass** die Vorrichtung einen Probenaufnahmebereich (7) umfasst, in dem ein Probengefäß (8) im Wesentlichen unterhalb des Messkopfes (1) angeordnet werden kann.

8. Vorrichtung zur Untersuchung einer Flüssigkeitsprobe nach Anspruch 7, **dadurch gekennzeichnet, dass** der Probenaufnahmebereich (7) aus Edelstahl aufgebaut ist und/oder eine Beschichtung aus Titanoxid aufweist.

9. Vorrichtung zur Untersuchung einer Flüssigkeitsprobe nach Anspruch 7 oder 9, **dadurch gekennzeichnet, dass** der Probenaufnahmebereich (7) eine Einrichtung umfasst, welche diesen mittels UV-Licht desinfiziert.

10. Vorrichtung zur Untersuchung einer Flüssigkeitsprobe nach wenigstens einem der Ansprüche 7 bis 9, **dadurch gekennzeichnet, dass** für das Probengefäß (8) ein drehbarer Probenteller (9) mit einem indirekten Antrieb vorgesehen ist.

11. Vorrichtung zur Untersuchung einer Flüssigkeitsprobe nach wenigstens einem der Ansprüche 1 bis 10, **dadurch gekennzeichnet, dass** der Messkopf (1) ein Einwegartikel ist.

12. Vorrichtung zur Untersuchung einer Flüssigkeitsprobe nach Anspruch 11, **dadurch gekennzeichnet, dass** eine Einrichtung vorgesehen ist, die einen einmalig benutzten Messkopf (1) markiert und/oder einen bereits benutzten Messkopf (1) erkennt.

13. Vorrichtung nach einem der Ansprüche 1 bis 12, **dadurch gekennzeichnet, dass** der Messkopf (1) eine Halteeinrichtung (49, 50) zur Halterung an einer Halteaufnahme der Vorrichtung aufweist, wobei die Halteeinrichtung ein Haltemittel (50), insbesondere eine Formschlusskomponente mit einer Sollbruchstelle, aufweist, welches so ausgeführt ist, dass nur eine einmalige Verwendung der Halteeinrichtung (49, 50) gegeben ist.

14. Vorrichtung nach einem der Ansprüche 1 bis 13, **dadurch gekennzeichnet, dass** der Messkopf (1) derart ausgeführt ist, dass er das von der Lichtquelle (2) aufgenommene Licht zum Lichtsensor (3) leitet.

15. Vorrichtung nach einem der Ansprüche 1 bis 13, **dadurch gekennzeichnet, dass** der Messkopf (1) derart ausgeführt ist, dass er das von der Lichtquelle aufgenommene Licht längs eines Lichtweges leitet, zu dem der Sensor benachbart angeordnet ist, in dem der Sensor aber nicht direkt angeordnet ist.

16. Vorrichtung nach Anspruch 4, **dadurch gekennzeichnet, dass** ein Fluidkanal (51) des Fluidiksystems im Messkopf (1) ausgeführt ist.

17. Vorrichtung nach Anspruch 16, **dadurch gekennzeichnet, dass** der Fluidkanal (51) über einen Dichtstopfen verschlossen ist, der in Messposition des Messkopfs (1) von einem Leitungsabschnitt (41) des messkopfaufnahmeseitigen Fluidiksystems durchdrungen wird.

18. Vorrichtung nach einem der Ansprüche 1 bis 17, **dadurch gekennzeichnet, dass** ein Fluidkanal des Titrationssystems im Messkopf (1) ausgeführt ist.

19. Vorrichtung nach einem der Ansprüche 1 bis 18, **gekennzeichnet durch** eine Rühreinrichtung (9, 10, 57) zum Rühren der Flüssigkeitsprobe, wobei der Messkopf (2) zumindest ein Strömungsbauteil, insbesondere mindestens einen Strömungsflügel (57), zum Zusammenwirken mit der Flüssigkeitsprobe aufweist.

20. Verfahren zur Untersuchung einer Flüssigkeitsprobe mittels Titration, **dadurch gekennzeichnet, dass** eine Vorrichtung nach einem der Ansprüche 1 bis 19 verwendet wird.

21. Verfahren nach Anspruch 20 mit folgenden Schritten:
- Bereitstellen (35) der Flüssigkeitsprobe;
- Messen (36) des Flüssigkeitspegels der Flüssigkeitsprobe durch Einfahren eines Messkopfs (1) von oben her in die Flüssigkeitsprobe;
- Bestimmen (40) der Konzentration mindestens einer lonenart der Flüssigkeitsprobe;
- Durchführen (43) einer Kristallisations-Messung durch Eindosieren eines Kristallbildners in die Flüssigkeitsprobe und Messen der Kristallbildung, bevorzugt durch Messen der Lichtdurchlässigkeit der Flüssigkeitsprobe nach dem Eindosieren.

22. Verfahren nach Anspruch 20 oder 21, **gekennzeichnet durch** das Einsetzen (34) eines neuen Einweg-Messkopfs (1) vor dem Eindosieren.

23. Verfahren nach einem der Ansprüche 20 bis 22, **gekennzeichnet durch** das Reinigen (37) und/oder Kalibrieren (38) eines Konzentrationsbestimmungssensors (24) vor der Konzentrationsbestimmung (40).

24. Verfahren nach einem der Ansprüche 20 bis 23, **gekennzeichnet durch** das Rühren (39) der Flüssigkeitsprobe vor der Konzentrationsbestimmung (40).

25. Verfahren nach einem der Ansprüche 20 bis 24, **gekennzeichnet durch** das Berechnen (44) eines Probenparameters aus den gemessenen Werten mit der Konzentration und der Lichtdurchlässigkeit.

26. Verfahren nach einem der Ansprüche 20 bis 25, **gekennzeichnet durch** das Bestimmen des pH-Wertes der Flüssigkeitsprobe.

27. Verfahren nach einem der Ansprüche 20 bis 26, **gekennzeichnet durch** das Bestimmen der Temperatur der Flüssigkeitsprobe.

## Claims

1. Device for analysing a liquid sample by means of titration, comprising
1.1 a light source (2);
1.2 a light sensor (3);
1.3 a measuring head (1) which can be immersed in the liquid sample to be analysed and comprises an optical waveguide, which receives and guides light from the light source (2), the measuring head (1) having a recess (5) which comprises a break in the optical waveguide and in which the liquid to be analysed penetrates when the measuring head (1) is immersed;
1.4 the measuring head (1) being separable from the light source (2) and the light sensor (3); and
1.5 a titration system for the defined addition of a titration liquid into the liquid sample,
1.6 a determining device for determining the level of liquid of the liquid sample by measuring a change in transmission of the light of the light source (2);
**characterised by**
- a drive device (12) for moving the measuring head (1) relative to a sample container (8), at least one portion of the determining device (2, 3, 5, 6.1, 6.2, 12, 13) being provided on the measuring head for determining the level of liquid of the liquid sample,
- the recess (5) being a portion of the determining device (2, 3, 5, 6.1, 6.2, 12, 13).

2. Device for analysing a liquid sample according to claim 1, **characterised in that** the device comprises a measuring system for measuring the pH of the liquid sample.

3. Device for analysing a liquid sample according to claim 1 or 2, **characterised in that** the device comprises a temperature measuring system for measuring the temperature of the liquid sample.

4. Device for analysing a liquid sample according to at least one of claims 1 to 3, **characterised in that** the device comprises a fluidics system for the defined removal of an amount of the liquid to be analysed.

5. Device for analysing a liquid sample according to claim 4, **characterised in that** the fluidics system comprises a calibration device having at least one calibration liquid.

6. Device for analysing a liquid sample according to claim 4 or 5, **characterised in that** the fluidics system comprises cleaning means.

7. Device for analysing a liquid sample according to claim 6, **characterised in that** the device comprises a sample removal region (7) in which a sample container (8) can be arranged substantially beneath the measuring head (1).

8. Device for analysing a liquid sample according to claim 7, **characterised in that** the sample removal region (7) is made of stainless steel and/or has a titanium oxide coating.

9. Device for analysing a liquid sample according to claim 7 or 9, **characterised in that** the sample removal region (7) comprises an apparatus which disinfects said sample removal region by means of UV light.

10. Device for analysing a liquid sample according to at least one of claims 7 to 9, **characterised in that** a rotatable sample disc (9) with an indirect drive is provided for the sample container (8).

11. Device for analysing a liquid sample according to at least one of claims 1 to 10, **characterised in that** the measuring head (1) is a single-use article.

12. Device for analysing a liquid sample according to claim 11, **characterised in that** an apparatus is provided which marks a measuring head (1) which has been used once and/or recognises a previously used measuring head (1).

13. Device according to any one of claims 1 to 12, **characterised in that** the measuring head (1) has a holding apparatus (49, 50) for holding the device in a holding receptacle, the holding apparatus having holding means (50), in particular an interlocking component with a predetermined breaking point, configured such that it is only possible to use the holding apparatus (49, 50) once.

14. Device according to any one of claims 1 to 13, **characterised in that** the measuring head (1) is configured such that it guides the light received from the light source (2) to the light sensor (3).

15. Device according to any one of claims 1 to 13, **characterised in that** the measuring head (1) is configured such that it guides the light received from the light source along a light path, to which the sensor is arranged adjacently but not arranged directly therein.

16. Device according to claim 4, **characterised in that** a liquid duct (51) of the fluidics system is configured in the measuring head (1).

17. Device according to claim 16, **characterised in that** the liquid duct (51) is closed by a watertight plug and, in the measuring position of the measuring head (1), is penetrated by a conduit portion (41) of the fluidics system at the measuring head intake side.

18. Device according to any one of claims 1 to 17, **characterised in that** a liquid duct of the titration system is configured in the measuring head (1).

19. Device according to any one of claims 1 to 18, **characterised by** a stirring apparatus (9, 10, 57) for stirring the liquid sample, the measuring head (2) having at least one flow component, in particular at least one flow blade (57), for cooperating with the liquid sample.

20. Method for analysing a liquid sample by means of titration, **characterised in that** a device according to any one of claims 1 to 19 is used.

21. Method according to claim 20 including the following steps:
- providing (35) the liquid sample;
- measuring (36) the level of liquid of the liquid sample by introducing a measuring head (1) into the liquid sample from above;
- determining (40) the concentration of at least one type of ion of the liquid sample;
- carrying out (43) a crystallisation measurement by adding a crystallising agent to the liquid sample and measuring the crystal formation, preferably by measuring the transparency of the liquid sample after addition of the crystallising agent.

22. Method according to claim 20 or 21, **characterised by** using (34) a new single-use measuring head (1) before addition of the crystallising agent.

23. Method according to any one of claims 20 to 22, **characterised by** cleaning (37) and/or calibrating (38) a concentration determining sensor (24) before determining the concentration (40).

24. Method according to any one of claims 20 to 23, **characterised by** stirring (39) the liquid sample before determining the concentration (40).

25. Method according to any one of claims 20 to 24, **characterised by** calculating (44) a sample parameter from the measured values with the concentration and the transparency.

26. Method according to any one of claims 20 to 25, **characterised by** determining the pH of the liquid sample.

27. Method according to any one of claims 20 to 26, **characterised by** determining the temperature of the liquid sample.

## Revendications

1. Dispositif destiné à analyser un échantillon liquide à l'aide d'un titrage comprenant :
1.1. une source de lumière (2) ;
1.2. un capteur de lumière (3) ;
1.3. une tête manométrique (1) pouvant être immergée dans l'échantillon liquide à analyser avec un conducteur de lumière, lequel reçoit de la source de lumière (2) de la lumière et la conduit, la tête manométrique (1) présentant un évidement (5) avec une interruption du conducteur de lumière, dans laquelle entre le liquide à analyser, dans le cas d'une tête manométrique (1) immergée ;
1.4. la tête manométrique (1) pouvant être séparée de la source de lumière (2) et du capteur de lumière (3) et
1.5. un système de titrage permettant d'indiquer de manière définie un liquide de titrage dans l'échantillon liquide ;
1.6. un dispositif de définition permettant de définir le niveau de liquide de l'échantillon liquide en mesurant un changement de transmission de la lumière de la source de lumière (2) ;
**caractérisé par**
- un dispositif d'entraînement (12) permettant de déplacer la tête manométrique (1) par rapport à un récipient d'échantillon (8), au moins une partie du dispositif de définition (2, 3, 5, 6.1, 6.2, 12, 13) permettant de définir le niveau de liquide de l'échantillon liquide étant prévue au niveau de la tête manométrique,
- l'évidement (5) constituant une partie du dispositif de définition (2, 3, 5, 6.1, 6.2, 12, 13).

2. Dispositif destiné à analyser un échantillon liquide selon la revendication 1, **caractérisé en ce que** le dispositif comporte un système de mesure permettant de mesurer la valeur du pH de l'échantillon liquide.

3. Dispositif destiné à analyser un échantillon liquide selon la revendication 1 ou 2, **caractérisé en ce que** le dispositif comporte un système de mesure de la température permettant de mesurer la température de l'échantillon liquide.

4. Dispositif destiné à analyser un échantillon liquide selon au moins l'une quelconque des revendications 1 à 3, **caractérisé en ce que** le dispositif comporte un système fluidique permettant de prélever de manière définie une quantité du liquide à analyser.

5. Dispositif destiné à analyser un échantillon liquide selon la revendication 4, **caractérisé en ce que** le système fluidique comporte un dispositif permettant d'étalonner avec au moins un liquide d'étalonnage.

6. Dispositif destiné à analyser un échantillon liquide selon la revendication 4 ou 5, **caractérisé en ce que** le système fluidique comporte un nettoyant.

7. Dispositif destiné à analyser un échantillon liquide selon la revendication 6, **caractérisé en ce que** le dispositif comporte une zone de prélèvement d'échantillon (7) dans laquelle un récipient d'échantillon (8) peut être disposé essentiellement sous la tête manométrique (1).

8. Dispositif destiné à analyser un échantillon liquide selon la revendication 7, **caractérisé en ce que** la zone de prélèvement d'échantillon (7) est composée d'acier spécial et/ou présente un revêtement en oxyde de titane.

9. Dispositif destiné à analyser un échantillon liquide selon la revendication 7 ou 9, **caractérisé en ce que** la zone de prélèvement d'échantillon (7) comporte un dispositif, qui désinfecte cette dernière au moyen d'UV.

10. Dispositif destiné à analyser un échantillon liquide selon au moins l'une quelconque des revendications 7 à 9, **caractérisé en ce que**, pour le récipient d'échantillon (8), un plateau d'échantillon (9) rotatif avec un entraînement indirect est prévu.

11. Dispositif destiné à analyser un échantillon liquide selon au moins l'une quelconque des revendications 1 à 10, **caractérisé en ce que** la tête manométrique (1) est un article à usage unique.

12. Dispositif destiné à analyser un échantillon liquide selon la revendication 11, **caractérisé en ce qu'**est prévu un dispositif, qui marque une tête manométrique (1) utilisée une seule fois et/ou reconnaît une tête manométrique (1) déjà utilisée.

13. Dispositif selon l'une quelconque des revendications 1 à 12, **caractérisé en ce** la tête manométrique (1) présente un dispositif de fixation (49, 50) permettant de fixer le dispositif sur un logement de fixation, le dispositif de fixation présentant un moyen de fixation (50), en particulier un composant de fermeture avec un point destiné à la rupture, réalisé de telle manière qu'il n'y a qu'une seule utilisation du dispositif de fixation (49, 50).

14. Dispositif selon l'une quelconque des revendications 1 à 13, **caractérisé en ce** la tête manométrique (1) est réalisée de telle sorte qu'elle conduit la lumière reçue de la source de lumière (2) vers le capteur de lumière (3).

15. Dispositif selon l'une quelconque des revendications 1 à 13, **caractérisé en ce** la tête manométrique (1) est réalisée de telle sorte qu'elle conduit la lumière reçue de la source de lumière (2) le long d'un trajet de lumière, à proximité duquel est disposé le capteur, sur lequel en revanche le capteur n'est pas directement disposé.

16. Dispositif selon la revendication 4, **caractérisé en ce qu'**un canal de liquide (51) du système fluidique est compris dans la tête manométrique (1).

17. Dispositif selon la revendication 16, **caractérisé en ce que** le canal de liquide (51) est fermé par un bouchon étanche qui, dans la position de mesure de la tête manométrique (1), est traversé par un segment conducteur (41) du système fluidique placé côté réception de la tête manométrique.

18. Dispositif selon l'une quelconque des revendications 1 à 17, **caractérisé en ce qu'**un canal de liquide du système de titrage est compris dans la tête manométrique (1).

19. Dispositif selon l'une quelconque des revendications 1 à 18, **caractérisé par** un dispositif d'agitation (9, 10, 57) permettant d'agiter l'échantillon liquide, la tête manométrique (2) présentant au moins un élément d'écoulement, en particulier au moins une pale d'écoulement (57) pour interagir avec l'échantillon liquide.

20. Procédé destiné à analyser un échantillon liquide au moyen d'un titrage, **caractérisé en ce qu'**un dispositif est utilisé selon l'une quelconque des revendications 1 à 19.

21. Procédé selon la revendication 20 comprenant les étapes suivantes consistant à :
- préparer (35) l'échantillon liquide ;
- mesurer (36) le niveau de liquide de l'échantillon liquide en insérant une tête manométrique (1) à partir du haut dans l'échantillon liquide ;
- définir (40) la concentration au moins du type d'ions de l'échantillon liquide ;
- effectuer (43) une mesure de cristallisation en dosant un cristalliseur dans l'échantillon liquide et mesurer la cristallisation de préférence en mesurant la perméabilité à la lumière de l'échantillon liquide après le dosage.

22. Procédé selon la revendication 20 ou 21, **caractérisé par** l'insertion (34) d'une nouvelle tête manométrique (1) à usage unique avant le dosage.

23. Procédé selon l'une quelconque des revendications 20 à 22, **caractérisé par** le nettoyage (37) et/ou l'étalonnage (38) d'un capteur de définition de la concentration (24) avant la définition de la concentration (40).

24. Procédé selon l'une quelconque des revendications 20 à 23, **caractérisé par** l'agitation (39) de l'échantillon liquide avant la définition de la concentration (40).

25. Procédé selon l'une quelconque des revendications 20 à 24, **caractérisé par** le calcul (44) d'un paramètre d'échantillon à partir des valeurs mesurées avec la concentration et la perméabilité à la lumière.

26. Procédé selon l'une quelconque des revendications 20 à 25, **caractérisé par** la définition de la valeur de pH de l'échantillon liquide.

27. Procédé selon l'une quelconque des revendications 20 à 26, **caractérisé par** la définition de la température de l'échantillon liquide.
